# EUROPÄISCHE PATENTSCHRIFT

(11) **EP 3 423 226 B1**
(45) Veröffentlichungstag und Bekanntmachung des Hinweises auf die Patenterteilung: **08.04.2020**
(21) Anmeldenummer: 16804697.7
(22) Anmeldetag: 04.11.2016
(51) Int. Cl.: B23K 9/02, B23K 9/18, B21K 1/76, B23K 26/06, B23K 26/26, F16J 15/3252, B23K 26/262, B23K 33/00

(54) **VERFAHREN ZUM HERSTELLEN EINES GESCHWEISSTEN RINGS**
METHOD FOR PRODUCING A WELDED RING
PROCÉDÉ DE PRODUCTION D'UNE BAGUE SOUDÉE

(30) Priorität: 29.02.2016 DE 102016103571
(43) Veröffentlichungstag der Anmeldung: 09.01.2019
(73) Patentinhaber: Oetiker Schweiz AG, 8810 Horgen (CH)
(72) Erfinder: MIESSMER, Stefan, 8004 Zürich (CH)
(74) Vertreter: Strehl Schübel-Hopf & Partner
(86) Internationale Anmeldenummer: PCT/EP2016/076644
(87) Internationale Veröffentlichungsnummer: WO 2017/148548

(56) Entgegenhaltungen:
- JP-A- S62 252 632
- US-A- 3 582 601
- US-A1- 2010 187 767

## Beschreibung

### Stand der Technik

Ringe, sogenannte Multi-Crimp-Ringe, werden in unterschiedlichen Ausführungen hergestellt. In einem bekannten Verfahren wird ein axial oder längs einer Schraubenlinie geschweißtes Rohr in Ringe gewünschter Breite zerteilt, die anschließend entgratet werden. Nachteilig bei diesem Verfahren sind die aus Kostengründen benötigten hohen Mindestproduktionsmengen, die dementsprechend geringe Flexibilität bei unterschiedlichen Durchmessern und die hohen Lagerhaltungskosten der Rohlings-Rohre.

Bei einem alternativen Herstellverfahren werden von einem entsprechend der gewünschten Ringbreite gespaltenen und entgrateten Band dem Ringumfang entsprechende Längen gerade oder schräg abgeschnitten und gebogen, deren Enden verschweißt werden; siehe US 2010/0187767 A1, die als nächstliegender Stand der Technik angesehen wird.

Beim Verschweißen der Bandenden lässt sich beim Einfahren des Schweißvorgangs eine mit der Ringkante im Wesentlichen bündige Schweißung erzielen. Demgegenüber entsteht beim Schweißaustritt an der anderen Ringkante eine mit der Kante unbündige Geometrie.

Aus EP 1 752 247 A1 ist es bekannt, beim Stumpfschweißen eines auf Biegung beanspruchten Werkstücks die Schweißnaht in zwei Teilnähten auszuführen, die an den äußeren Enden beginnend im mittleren Bereich einander überlappen, um Kerben am Außenrand des Werkstücks zu vermeiden.

### Abriss der Erfindung

Der Erfindung liegt die generelle Aufgabe zugrunde, Nachteile, wie sie bei vergleichbaren Verfahren zum Herstellen eines geschweißten Rings auftreten, mindestens teilweise zu beseitigen. Eine speziellere Aufgabe der Erfindung kann darin gesehen werden, ein Verfahren anzugeben, mit dem sich geschweißte Ringe mit möglichst gleichmäßiger Schweißnaht herstellen lassen.

Die Lösung dieser Aufgabe gelingt dadurch, dass an den miteinander zu verschweißenden Bandenden ein in der Bandebene liegender Versatz in Umfangsrichtung des Rings vorgesehen ist und die Schweißung von beiden Ringseitenkanten her von außen nach innen bis zu dem Versatz erfolgt. Dabei findet an beiden Ringkanten eine bündige Schweißung statt. Der Versatz bewirkt, dass in der Bandmitte der Effekt des Wegfließens der Schmelze bei einer Überlappung der beiden Schweißnähte reduziert und dadurch eine bessere Schweißgüte im Überlappungsbereich erzielt wird.

### Kurzbeschreibung der Zeichnungen

Ausführungsbeispiele der Erfindung werden nachstehend anhand der Zeichnungen näher erläutert. Darin zeigen:
Fig. 1a und 1b perspektivische Darstellungen eines Teils der Stoßstelle eines zu einem Ring gebogenen Bandes vor und nach dem Verschweißen und
Fig. 2a und 2b ähnliche Darstellungen mit alternativer Gestaltung der Stoßstelle.

### Ausführungsbeispiele

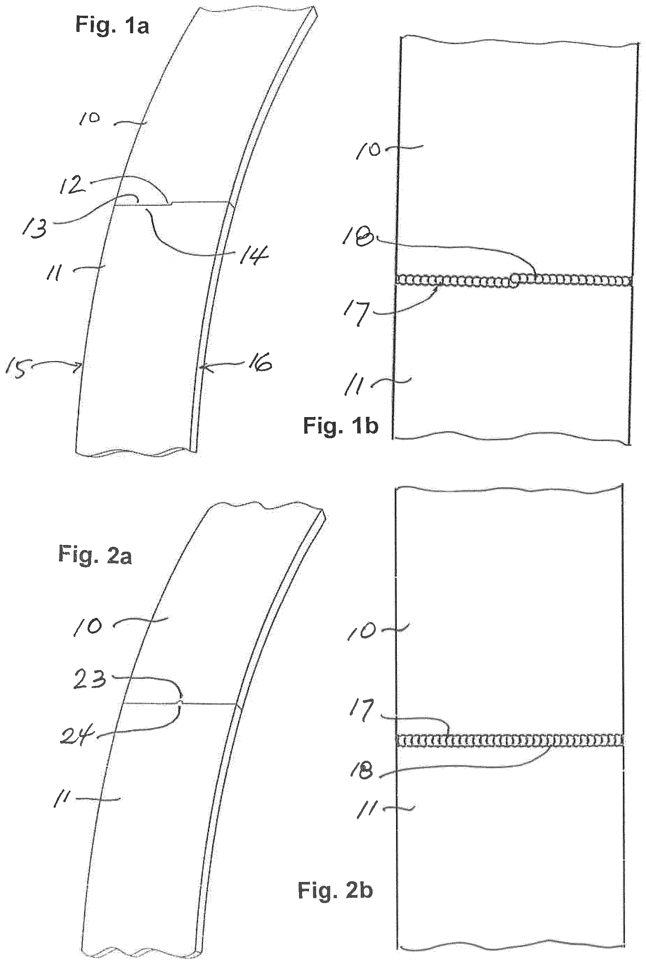

In Fig. 1a weist die Stoßstelle, an der die beiden Bandenden 10, 11 miteinander verschweißt werden, einen Versatz in Form einer in der Bandebene liegenden Stufe 12 auf, an der ein am einen Bandende 10 vorspringender Teil 13 einem zurückspringenden Teil 14 am anderen Bandende 11 gegenübersteht. Die Stufe 12 ist in der Mitte zwischen den beiden Bandkanten 15, 16 ausgebildet.

Beim Schweißvorgang wird von beiden Bandkanten 15, 16 ausgehend bis zu der Stufe 12 geschweißt. Durch den Versatz wird eine bessere Schweißgüte im Bereich der Überlappung der beiden Schweißnähte 17, 18 an der jeweiligen Stelle erzielt. Der Versatz ist nur so stark, dass auch an dieser Stelle eine kontrollierte Schweißverbindung der aneinender stoßenden Bandenden 10, 11 entsteht.

Besteht keine Unterbrechung (Versatz) an der Überlappungsstelle der beiden Schweißnähte 17, 18, so entsteht an den aneinander stoßenden Bandenden zweimal ein Schmelzbad. Dies führt im Überlappungsbereich zu verringerter Schweißgüte. Durch den Versatz fallen die Auswirkungen des zweifachen Schmelzbades auf die Schweißgüte geringer, konsistenter aus.

Die Gestaltung nach Fig. 2a und 2b unterscheidet sich von der nach Fig. 1a und 1b dadurch, dass der Versatz als in der Bandebene liegende Einbuchtung 23 am einen Bandende 10 ausgebildet ist, in die eine komplementäre Ausbuchtung 24 am anderen Bandende 11 eingreift.

## Patentansprüche

1. Verfahren zum Herstellen eine geschweißten Rings, bei dem ein Band mit dem Ringumfang entsprechender Länge zu einem Ring gebogen und an seinen Enden (10,11) verschweißt wird, wobei die Schweißung von beiden Ringseitenkanten (15,16) her von außen nach innen erfolgt, **dadurch gekennzeichnet, dass** die miteinander zu verschweißenden Bandenden (10,11) einen in der Bandebene liegenden Versatz (12,23,24) in Umfangsrichtung des Rings aufweisen und die Schweißung von beiden Ringseitenkanten (15,16) her bis zu dem Versatz (12,23,24) erfolgt.

2. Verfahren nach Anspruch 1, wobei der Versatz als Stufe (12) ausgebildet ist, an der ein am einen Bandende vorspringender Teil einem zurückspringenden Teil am anderen Bandende gegenübersteht.

3. Verfahren nach Anspruch 1, wobei der Versatz als in der Bandebene liegende Einbuchtung (23) am einen Bandende ausgebildet ist, in die eine komplementäre Ausbuchtung (24) am anderen Bandende eingreift.

4. Verfahren nach einem der vorhergehenden Ansprüche, wobei der Versatz (12,23,24) in der Mitte der Bandbreite vorgesehen ist.

## Claims

1. A method of producing a welded ring wherein a band of a length corresponding to the circumference of the ring is bent to form a ring and welded at its ends (10, 11), the welding being performed from both lateral edges (15, 16) of the ring from the outside inwards, **characterised in that** the band ends (10, 11) to be welded together have an offset (12, 23, 24) in the circumferential direction of the ring and the welding is performed from both lateral edges (15, 16) of the ring up to the offset (12, 23, 24).

2. The method of claim 1, wherein the offset is formed as a step (12) at which a portion projecting from one band end is opposite to a recessed portion in the other band.

3. The method of claim 1, wherein the offset is formed as a recess (23) at one band end lying in the plane of the band and engaging a complementary projection (24) at the other band end.

4. The method of any preceding claim, wherein the offset (12, 23, 24) is provided midway of the band width.

## Revendications

1. Procédé de production d'une bague soudée dans lequel une bande d'une longueur correspondant à la circonférence de la bague est courbée pour former une bague et soudée à ses extrémités (10, 11), le soudage étant effectué depuis les deux bords latéraux (15, 16) de la bague de l'extérieur vers l'intérieur, **caractérisé en ce que** les extrémités (10, 11) de bande devant être soudées ensemble ont un décalage (12, 23, 24) dans le sens circonférentiel de la bague et le soudage est effectué depuis les deux bords latéraux (15, 16) de la bague jusqu'au décalage (12, 23, 24).

2. Procédé selon la revendication 1, dans lequel le décalage est formé comme une marche (12) à laquelle une partie se projetant depuis une extrémité de bande est opposée à une partie en renfoncement dans l'autre bande.

3. Procédé selon la revendication 1, dans lequel le décalage est formé comme un renfoncement (23) à une extrémité de bande reposant dans le plan de la bande et engageant une projection complémentaire (24) à l'autre extrémité de bande.

4. Procédé selon une quelconque revendication précédente, dans lequel le décalage (12, 23, 24) est prévu à mi-chemin de la largeur de bande.
